# EUROPÄISCHE PATENTSCHRIFT

(11) **EP 3 792 547 B1**
(45) Veröffentlichungstag und Bekanntmachung des Hinweises auf die Patenterteilung: **18.10.2023**
(21) Anmeldenummer: 20192877.7
(22) Anmeldetag: 26.08.2020
(51) Int. Cl.: F21S 41/14, F21S 41/147, F21S 41/16, F21S 41/20, F21S 41/32, F21S 41/151, F21S 41/663, F21S 41/25, F21S 41/255, B60Q 1/00, B60Q 1/14, H05B 45/10

(54) **BLENDFREIER SCHEINWERFER UND KRAFTFAHRZEUG**
GLARE-FREE HEADLAMP AND MOTOR VEHICLE
PHARE DE VÈHICULE SANS ÉBLOUISSEMENT ET VÉHICULE AUTOMOBILE

(30) Priorität: 10.09.2019 DE 102019124200
(43) Veröffentlichungstag der Anmeldung: 17.03.2021
(73) Patentinhaber: HELLA GMBH & CO. KGAA, 59552 Lippstadt (DE)
(72) Erfinder: HAASE, Christian, 59597 Erwitte (DE); HANSEN, Julien, 33102 Paderborn (DE)

(56) Entgegenhaltungen:
- EP-A1- 3 375 663
- EP-A2- 2 827 049
- WO-A1-2019/050939
- DE-A1-102013 001 274
- DE-A1-102017 129 291
- US-A1- 2008 055 896
- US-B2- 10 124 715
- US-B2- 10 189 399

## Beschreibung

Die Erfindung betrifft einen blendfreien Scheinwerfer für ein Kraftfahrzeug und ein Kraftfahrzeug mit einem solchen Scheinwerfer.

Blendfreie Scheinwerfer aus dem Stand der Technik nutzen zur Erkennung von Objekten, beispielsweise anderen Verkehrsteilnehmer oder Hindernissen, im Kraftfahrzeug angeordnete Kamerasysteme. Eine Detektion dieser Objekte mittels der Kamerasysteme erfolgt, um ein entsprechendes Lichtquellenelement des Scheinwerfers, welches einen Raumwinkel ausleuchtet, in dem sich das Objekt befindet, zu ermitteln und zur Vermeidung einer Blendung des Objekts auszuschalten. Ohne eine Erkennung des Objektes kann keine blendfreie Lichtfunktion bereitgestellt werden.

Die bekannten blendfreien Scheinwerfer haben wegen der notwendigen Kamerasysteme hohe Anschaffungskosten. Zudem ist die Erkennung der Objekte mittels der Kamerasysteme fehleranfällig und benötigt lange Rechenzeiten, sodass die Reaktionszeiten nicht so kurz wie gewünscht ausfallen und eine Blendung eines Verkehrsteilnehmers verursachen können. Ferner sind hohe Rechenkapazitäten einer entsprechenden Steuereinheit des blendfreien Scheinwerfers erforderlich. Schließlich ist der maximal um das Kraftfahrzeug herum detektierbare Raum durch das Kamerasystem begrenzt und lässt sich nur über die Nutzung mehrerer Kamerasysteme vergrößern, was die bekannten blendfreien Scheinwerfer noch kostenintensiver macht.

Ein blendfreier Scheinwerfer gemäß dem Oberbegriff von Anspruch 1 ist aus WO 2019/050939 A1 oder US 2008/055896 A1 bekannt.

Aufgabe der Erfindung ist es, aus dem Stand der Technik bekannte Nachteile bei Scheinwerfern für Kraftfahrzeuge zu vermindern. Insbesondere ist es Aufgabe der Erfindung, einen blendfreien Scheinwerfer für Kraftfahrzeuge mit geringen Anschaffungskosten, schnellen Reaktionszeiten und hoher Raumabdeckung bereitzustellen.

Die voranstehende Aufgabe wird durch die Gegenstände der Patentansprüche, insbesondere durch einen blendfreien Scheinwerfer für ein Kraftfahrzeug nach Anspruch 1 und ein Kraftfahrzeug nach Anspruch 13 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Scheinwerfer offenbart sind, selbstverständlich auch im Zusammenhang mit dem erfindungsgemäßen Kraftfahrzeug sowie umgekehrt, sodass bezüglich der Offenbarung zu den einzelnen Erfindungsaspekten stets wechselseitig Bezug genommen wird beziehungsweise werden kann.

Gemäß dem ersten Aspekt löst die Erfindung die Aufgabe durch einen blendfreien Scheinwerfer für ein Kraftfahrzeug mit einer Vielzahl von Lichteinheiten, wobei jeweils jede der Lichteinheiten aufweist: (a) ein Lichtquellenelement, das dazu eingerichtet ist, Licht entlang einer ersten optischen Achse in Richtung eines Raumes zu emittieren, (b) eine Projektionsoptik, die in Richtung des emittierten Lichtes hinter dem Lichtquellenelement angeordnet ist und dazu eingerichtet ist, das von dem Lichtquellenelement emittierte Licht unter einem Raumwinkel in den Raum zu projizieren, und (c) einen Photodetektor, der in Richtung des emittierten Lichtes vor der Projektionsoptik angeordnet und dazu eingerichtet ist, das von der Projektionsoptik in den Raum projizierte und von einem Objekt in dem Raum entlang einer zweiten optischen Achse zurück zu der Projektionsoptik reflektierte Licht zu erfassen, und wobei der Scheinwerfer dazu eingerichtet ist, das Emittieren von Licht eines Lichtquellenelementes zu beenden, wenn das emittierte Licht zurück reflektiert und von dem Photodetektor der Lichteinheit mit dem Lichtquellenelement erfasst wird. Dabei ist jede der Projektionsoptiken dazu eingerichtet, Licht unter einem Raumwinkel in den Raum zu projizieren, der sich von den Raumwinkeln der anderen Projektionsoptiken unterscheidet. Dabei können sich benachbarte Raumwinkel der Projektionsoptiken geringfügig überlappen, um eine gleichmäßige Ausleuchtung des Raumes sicherzustellen. Dadurch wird sichergestellt, dass ein im Wesentlichen separater Raumwinkel von je einem Lichtquellenelement abgedeckt bzw. ausgeleuchtet wird, sodass je nur ein Lichtquellenelement pro Raumwinkel ausgeschaltet werden muss, wenn ein Photodetektor der Lichteinheit mit dem Lichtquellenelement das reflektierte Licht erfasst.

Erfindungsgemäß ist jedem Lichtquellenelement eine Projektionsoptik und ein Photodetektor zugeordnet, der das von dem Lichtquellenelement emittierte und bidirektional durch die Projektionsoptik verlaufende Licht bei Reflektion erfasst. Das von einem Photodetektor erfasste Licht kann entsprechend dem ihm zugeordneten Lichtquellenelement zugeordnet und ausgeschaltet werden. Mit anderen Worten wird mittels des Erfassens des reflektierten Lichtes das Objekt in einem Raumwinkel detektiert. Dadurch kann ein Blenden des derart detektierten Objektes vermieden werden. Das Objekt ist insbesondere ein Verkehrsteilnehmer, ferner insbesondere ein Kraftfahrzeug. Durch den Verzicht auf teure und aufwändige Kamerasysteme wird ein blendfreier Scheinwerfer mit geringen Anschaffungskosten bereitgestellt. Da eine Analyse eines aufgenommenen Bildes, wie es von Kamerasystemen aufgenommen wird, entfällt und lediglich das emittierte Licht ausgewertet wird, stellt der erfindungsgemäße blendfreie Scheinwerfer zudem schnellere Reaktionszeiten bereit. Zudem wird mittels der Integration der Photodetektoren in den Lichteinheiten eine hohe Raumabdeckung durch die Anordnung von Lichteinheiten um das Kraftfahrzeug herum vergleichsweise kostengünstig erzielt.

Bei dem erfindungsgemäßen Scheinwerfer ist jeder Photodetektor einem Lichtquellenelement und ferner jede Projektionsoptik einem Lichtquellenelement zugeordnet. Zudem weist jedes Lichtquellenelement eine eigene erste optische Achse auf. Mit anderen Worten ist die erste optische Achse für jedes Lichtquellenelement verschieden. Bei dem von dem Lichtquellenelement emittierten Licht und dem von dem Objekt zurück reflektierten Licht handelt es sich um dasselbe Licht, dass lediglich zurück reflektiert und von dem jeweiligen Photodetektor erfasst wird.

Bevorzugt weist der Scheinwerfer zumindest eine Steuereinheit auf oder ist der Scheinwerfer mit einer Steuereinheit des Kraftfahrzeuges verbunden, die dazu eingerichtet ist, zumindest eine der Lichtquellenelemente zu steuern. Insbesondere ist die Steuereinheit dazu eingerichtet, ein Detektionssignal zumindest eines der Photodetektoren zu empfangen. Das Detektionssignal wird von dem Photodetektor an die Steuereinheit übermittelt, wenn der Photodetektor Licht erfasst, insbesondere das von dem ihm zugeordneten Lichtquellenelement emittierte und an dem Objekt reflektierte Licht erfasst. Das Detektionssignal kann Informationen über Lichtparameter wie Lichtintensitität, Wellenlänge und Frequenz des Lichtes enthalten. Die Steuereinheit kann eine Steuereinheit des Scheinwerfers sein und mit allen Lichteinheiten, insbesondere mit den Lichtquellenelementen und den Photodetektoren, steuerungstechnisch verbunden sein. Die Steuereinheit kann zusätzlich oder alternativ auch eine eigene Steuereinheit der Lichteinheit sein. Entsprechend kann jede Lichteinheit eine eigene Steuereinheit aufweisen, die das Lichtquellenelement und den Photodetektor der jeweiligen Lichteinheit steuerungstechnisch miteinander verbindet. Die Steuereinheit ist insbesondere dazu eingerichtet, die Lichtquellenelemente ein und aus zu schalten. Ferner ist die Steuereinheit insbesondere dazu eingerichtet, das Detektionssignal des Photodetektors auszuwerten und in eine Anweisung zum Einschalten (bzw. eingeschaltet lassen) oder Ausschalten des Lichtquellenelementes der Lichteinheit dieses Photodetektors umzuwandeln. Insbesondere ist die Steuereinheit des Scheinwerfers dazu eingerichtet, das Emittieren von Licht eines Lichtquellenelementes zu beenden, wenn das emittierte Licht zurückreflektiert und von dem Photodetektor der Lichteinheit mit dem Lichtquellenelement erfasst wird.

Bevorzugt sind die Lichtquellenelemente dazu eingerichtet, zu einem Testzeitpunkt nach dem Beenden des Emittierens von Licht, testweise Licht zu emittieren und: (a) wenn das testweise emittierte Licht nicht zurück reflektiert und von dem Photodetektor ihrer Lichteinheit nicht erfasst wird, weiter Licht zu emittieren, und (b) wenn das testweise emittierte Licht zurück reflektiert und von dem Photodetektor ihrer Lichteinheit erfasst wird, zu einem weiteren Testzeitpunkt erneut testweise Licht zu emittieren. Mittels des testweise emittierten Lichtes wird getestet, ob das vormals detektierte Objekt sich noch in einem Raumwinkel des Lichtquellenelementes befindet, das ausgeschaltet wurde, um das detektierte Objekt nicht zu blenden. Es handelt sich dabei um eine Verfahrensabfolge, die wiederholt wird, bis das detektierte Objekt nicht mehr in dem Raumwinkel des Lichtquellenelementes liegt. Das Licht kann in festen oder variablen Abständen testweise emittiert werden. Die variablen Abstände können beispielsweise abhängig von der Entfernung zum Objekt bestimmt werden. Dadurch kann schnellstmöglich wieder eine Ausleuchtung des Raumwinkels des jeweiligen Lichtquellenelementes erfolgen. Dadurch wird bei einem Kraftfahrzeug mit dem erfindungsgemäßen Scheinwerfer sichergestellt, dass die Lichtquellenelemente der Scheinwerfer möglichst lange eingeschaltet sind, um eine sichere Fahrt zu ermöglichen.

Zudem ist bevorzugt, dass eine Frequenz des testweise emittierten Lichtes unterhalb einer Flimmerverschmelzfrequenz des menschlichen Auges liegt. Mit anderen Worten sind die Lichtquellenelemente dazu eingerichtet, das testweise emittierte Licht mit einer Frequenz zu emittieren, die unterhalb der Flimmerverschmelzfrequenz des menschlichen Auges liegt. Dadurch wird sichergestellt, dass das Objekt, an dem das emittierte Licht reflektiert wird, nicht geblendet wird. Dadurch wird vermieden, dass beispielsweise entgegenkommender Gegenverkehr von vorne oder vorausfahrender Gegenverkehr von hinten geblendet wird.

Weiterhin ist bevorzugt, dass der Scheinwerfer dazu eingerichtet ist, anhand des testweise emittierten Lichtes auszuwerten, ob sich das Objekt bewegt und insbesondere zu ermitteln, mit welcher Geschwindigkeit sich das Objekt bewegt. Insbesondere ist die Steuereinheit des Scheinwerfers dazu eingerichtet, anhand des testweise emittierten Lichtes auszuwerten, ob sich das Objekt bewegt und insbesondere zu ermitteln, mit welcher Geschwindigkeit sich das Objekt bewegt. Dies kann beispielsweise durch Ermittlung der sogenannten Time of Flight erfolgen. Dabei wird die Zeit von der Emission des Lichtes von dem Lichtquellenelement bis zur Erfassung an dem Photodetektor gemessen. Die Zeit des Lichtes bzw. eines solchen Lichtimpulses korreliert mit der Entfernung des Lichtquellenelementes von dem Objekt. Unter Berücksichtigung der eigenen Geschwindigkeit kann bei konsekutiver Ermittlung der Time of Flight bestimmt werden, wie schnell sich das Objekt, an dem das emittierte Licht reflektiert wird, auf das eigene Kraftfahrzeug zu bewegt. So kann insbesondere bestimmt werden, wann das eigene Kraftfahrzeug an dem Objekt vorbeifährt, um das Lichtquellenelement wieder anzuschalten bzw. den ausgeschalteten Raumwinkel wieder auszuleuchten. Der Scheinwerfer, insbesondere die Steuereinheit, kann ferner dazu eingerichtet sein, eine Entfernung zum Objekt anhand des testweise emittierten Lichtes und der Geschwindigkeit des eigenen Kraftfahrzeuges auszuwerten.

Vorteilhafterweise ist zudem der Photodetektor jeder Lichteinheit in Richtung quer zu der jeweiligen ersten optischen Achse neben dem Lichtquellenelement ihrer Lichteinheit angeordnet. Insbesondere kann der Photodetektor jeder Lichteinheit in Richtung orthogonal zu der jeweiligen ersten optischen Achse neben dem Lichtquellenelement ihrer Lichteinheit angeordnet sein. Dadurch wird eine Anordnung bereitgestellt, bei der die ersten optischen Achsen und die zweiten optischen Achsen in ihrer Funktion nicht beeinträchtigt werden.

Alternativ können die erste optische Achse und die zweite optische Achse einander entsprechen. Dadurch werden Ungenauigkeiten infolge etwa von streuendem Licht bei der Erfassung des reflektierten Lichtes minimiert und die Präzision des Photodetektors wird insgesamt erhöht.

Vorteilhaft ist ferner, wenn der Photodetektor jeder Lichteinheit höchstens in einem Abstand von dem Lichtquellenelement ihrer Lichteinheit angeordnet ist, der dem dreifachen einer größten Seitenlänge oder einem Durchmesser einer Lichtemissionsfläche des Lichtquellenelements entspricht. Zusätzlich oder alternativ kann der Abstand einer größten Seitenlänge oder einem größten Radius einer Projektionsfläche der Projektionsoptik der Lichteinheit entsprechen. Die Lichtemissionsfläche eines Lichtquellenelementes ist die Fläche, aus der das Licht aus dem Lichtquellenelement austritt. Die Lichtemissionsfläche kann je nach Lichtquellenelement unterschiedliche Formen, beispielsweise rund bei einem Lichtleiter, wie beispielsweise Glasfaser, oder rechteckig bei einem Laser aufweisen.

Entsprechend wird bei einem Lichtquellenelement mit einer runden Lichtemissionsfläche der Durchmesser der runden Lichtemissionsfläche und bei einem Lichtquellenelement mit einer rechteckigen Lichtemissionsfläche eine größte Seitenlänge der rechteckigen Fläche als Maß für den Abstand zwischen Photodetektor und Lichtquellenelement herangezogen. Analoges gilt für die Projektionsfläche mit dem Unterschied, dass das Licht von der Projektionsfläche projiziert wird. Auch dadurch werden Ungenauigkeiten infolge etwa von streuendem Licht bei der Erfassung des reflektierten Lichtes minimiert und die Präzision des Photodetektors wird insgesamt erhöht.

Bevorzugt ist, dass der Scheinwerfer dazu eingerichtet ist, zurückreflektiertes Licht anhand zumindest eines Lichtparameters des emittierten Lichtes den Lichtquellenelementen zuzuordnen. Insbesondere ist eine Steuereinheit des Scheinwerfers dazu eingerichtet ist, zurückreflektiertes Licht anhand zumindest eines Lichtparameters des emittierten Lichtes den Lichtquellenelementen zuzuordnen. Der zumindest eine Lichtparameter kann von dem Photodetektor erfasst werden. Ferner kann der zumindest eine Lichtparameter an den Scheinwerfer bzw. die Steuereinheit als Information übermittelt werden. Der Scheinwerfer bzw. die Steuereinheit kann dann anhand eines Vergleiches des zumindest einen bekannten Lichtparameters des von dem Lichtquellenelement emittierten Lichtes mit dem zumindest einen Lichtparameter des am Objekt reflektierten und vom Photodetektor erfassten Lichtes ermitteln, ob es sich bei dem erfassten Licht um das von dem Lichtquellenelement der Lichteinheit mit dem Photodetektor emittierte Licht handelt. Der zumindest eine Lichtparameter kann beispielsweise eine Lichtintensitität, eine Wellenlänge oder eine Frequenz sein. Dadurch kann vermieden werden, dass ein Lichtquellenelement das Emittieren von Licht beendet, obwohl nicht das reflektierte Licht vom Photodetektor, sondern etwa ein Streulicht oder fremdes Licht erfasst wurde.

Bevorzugt ist ferner, dass jede der Lichtquellenelemente dazu eingerichtet ist, Licht zu einem Zeitpunkt zu emittieren, der sich von dem Zeitpunkt der Emission des Lichtes der anderen Lichtquellenelemente unterscheidet. Mit anderen Worten emittiert jedes Lichtquellenelement das Licht bzw. Lichtpulse zu je einem Zeitpunkt, zu dem keines der anderen Lichtquellenelemente Licht bzw. Lichtpulse emittiert. Insbesondere ist die Steuereinheit des Scheinwerfers dazu eingerichtet, das an den Photodetektoren erfasste reflektierte Licht anhand des Zeitpunktes des Emittierens des Lichtes durch das Lichtquellenelement der Lichteinheit mit dem jeweiligen Photodetektor zuzuordnen. Dadurch kann das erfasste Licht mittels einer berechneten Zeitdauer von der Emission des Lichtes bis zum Erfassen des reflektierten Lichtes (Time of Flight) unterschieden werden. Auch dies ermöglicht es, das erfasste Licht zuverlässig einem emittierten Licht und damit einem Lichtquellenelement zuzuordnen.

Bevorzugt ist zudem, dass jedes der Lichtquellenelemente dazu eingerichtet, Licht mit einer Frequenz zu emittieren, die sich von der Frequenz des Lichtes der anderen Lichtquellenelemente unterscheidet. Mit anderen Worten emittiert jedes Lichtquellenelement Licht mit einer Frequenz, mit der keine der anderen Lichtquellenelemente Licht emittiert. Insbesondere ist die Steuereinheit des Scheinwerfers dazu eingerichtet, das an den Photodetektoren erfasste reflektierte Licht anhand einer Frequenz des von dem Lichtquellenelement der Lichteinheit mit dem jeweiligen Photodetektor emittierten Lichtes zuzuordnen. Dadurch kann das erfasste Licht mittels einer eindeutigen Frequenz von den Lichtern anderer Lichtquellenelemente unterschieden werden. Auch dies ermöglicht es, das erfasste Licht zuverlässig einem emittierten Licht zuzuordnen.

Bevorzugt sind die Lichtquellenelemente als LED, laserbasiert und/oder mit einem Lichtleiter ausgebildet und/oder liegt das emittierte Licht im für das menschliche Auge sichtbaren Wellenlängenbereich. Ferner können die Lichtquellenelemente dazu eingerichtet sein, ein Fernlicht zu emittieren bzw. können die Lichtquellenelemente Fernlichtquellenelemente sein. Alternativ oder zusätzlich zum Emittieren von Licht im sichtbaren Wellenlängenbereich ist es beispielsweise möglich, infrarotes oder ultraviolettes Licht zu emittieren, um hiermit die Umgebung zu scannen.

Gemäß dem zweiten Aspekt löst die Erfindung die Aufgabe durch ein Kraftfahrzeug mit zumindest einem erfindungsgemäßen Scheinwerfer. Das Kraftfahrzeug kann beispielsweise ein Motorrad, ein Personenkraftwagen, ein Lastkraftwagen, eine Baumaschine, eine Agrarmaschine usw. sein.

Bevorzugt ist der zumindest eine Scheinwerfer dazu eingerichtet, dass alle Raumwinkel, unter denen die Projektionsoptiken das Licht in den Raum projizieren, einen 360°-Sichtbereich um das Kraftfahrzeug herum abdecken. Dazu kann das Kraftfahrzeug insbesondere zwei, drei, vier oder mehr Scheinwerfer aufweisen. Das Kraftfahrzeug kann insbesondere eine Agrarmaschine sein. Bei Agrarmaschinen ist häufig eine Ausleuchtung um 360° um das Kraftfahrzeug wünschenswert und kann mit Kamerasystemen nur unter sehr hohen Anschaffungskosten realisiert werden.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigt:
- Fig. 1: eine schematische Ansicht eines Ausführungsbeispieles eines erfindungsgemäßen Scheinwerfers,
- Fig. 2: eine schematische Ansicht einer alternativen Ausführungsalternative einer Lichteinheit des Scheinwerfers aus Fig. 1, und
- Fig. 3: eine schematische Vorderansicht auf ein Ausführungsbeispiel eines erfindungsgemäßen Kraftfahrzeuges.

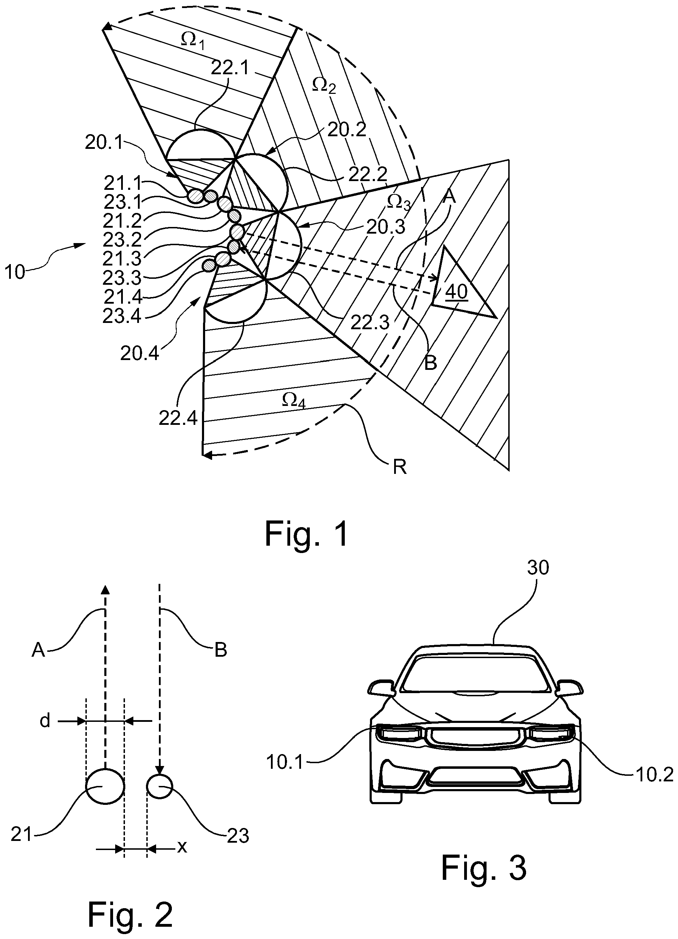

Elemente mit gleicher Funktion und Wirkungsweise sind in den Figuren 1 bis 3 jeweils mit denselben Bezugszeichen versehen. Mehrere gleiche Elemente sind in den Figuren mit einem Punkt hinter dem Bezugszeichen versehen und fortlaufend nummeriert.

Figur 1 zeigt eine schematische Ansicht eines Ausführungsbeispieles eines erfindungsgemäßen Scheinwerfers 10. Der Scheinwerfer 10 weist vier Lichteinheiten 20.1, 20.2, 20.3, 20.4 auf. Jede der Lichteinheiten 20.1, 20.2, 20.3, 20.4 weist je ein Lichtquellenelement 21.1, 21.2, 21.3, 21.4, eine Projektionsoptik 22.1, 22.2, 22.3, 22.4 und einen Photodetektor 23.1, 23.2, 23.3, 23.4 auf. Die Lichtquellenelemente 21.1, 21.2, 21.3, 21.4 und Photodetektoren 23.1, 23.2, 23.3, 23.4 sind jeweils in Richtung des von den Lichtquellenelementen 21.1, 21.2, 21.3, 21.4 emittierten Lichtes vor den Projektionsoptiken 22.1, 22.2, 22.3, 22.4 angeordnet. Ferner sind in diesem Ausführungsbeispiel die Lichtquellenelemente 21.1, 21.2, 21.3, 21.4 und Photodetektoren 23.1, 23.2, 23.3, 23.4 in Richtung orthogonal zu den ersten optischen Achsen A der Lichtquellenelemente 21.1, 21.2, 21.3, 21.4 nebeneinander angeordnet.

Dabei ist nur die erste optische Achse A des Lichtquellenelementes 21.3 eingezeichnet, während die ersten optischen Achsen der restlichen Lichtquellenelemente 21.1, 21.2, 21.4 der Übersichtlichkeit halber nicht gezeigt sind. Entlang der ersten optischen Achse A wird das Licht des Lichtquellenelementes 21.3 übertragen. Das von den Lichtquellenelementen 21.1, 21.2, 21.3, 21.4 emittierte Licht deckt jeweils einen Raumwinkel Ω₁, Ω₂, Ω₃, Ω₄ des gestrichelt angedeuteten Raumes R ab bzw. leuchtet diesen aus.

An einem Objekt 40, das beispielsweise ein auf einer Gegenfahrbahn entgegenkommendes Kraftfahrzeug sein kann, wird das von dem Lichtquellenelement 21.3 emittierte Licht zurück durch die Projektionsoptik 22.3 zu dem Photodetektor 23.3 reflektiert, der das Licht erfasst. Der Photodetektor 23.3 ist mittels einer nicht gezeigten Steuereinheit des Scheinwerfers 10 mit dem Lichtquellenelement 21.3 verbunden. Auf das Erfassen des von dem Lichtquellenelement 21.3 emittierten Lichtes hin veranlasst die Steuereinheit, dass das Lichtquellenelement 21.3 ausgeschaltet wird, um das Objekt 40 nicht zu blenden. Die Steuereinheit vergleicht dabei Lichtparameter wie Wellenlänge, Frequenz und Lichtintensitität des von dem Lichtquellenelement 21.3 emittierten Lichtes mit denen des am Photodetektor 23.3 erfassten Lichtes, welche von dem Photodetektor 23.3 an die Steuereinheit übermittelt werden, um sicherzugehen, dass es sich bei dem von dem Photodetektor 23.3 erfassten Licht bei dem von dem Lichtquellenelement 21.3 emittierten Licht handelt. Dadurch wird vermieden, dass das Lichtquellenelement 21.3 ausgeschaltet wird, obwohl keine Gefahr einer Blendung eines Objektes besteht.

Um den Zeitpunkt festzustellen, zu dem das Objekt 40 sich nicht mehr in dem Raumwinkel Ω₃ des Lichtquellenelementes 21.3 des Kraftfahrzeuges 30 befindet, sodass das Lichtquellenelement 21.3 wieder eingeschaltet werden kann, kann testweise Licht mit einer Frequenz unterhalb der Flimmerverschmelzfrequenz des menschlichen Auges von dem Lichtquellenelement 21.3 emittiert werden. Sobald das testweise emittierte Licht nicht mehr zurück reflektiert und von dem Photodetektor 23.3 erfasst wird, weist die Steuereinheit das Lichtquellenelement 21.3 dazu an, weiter Licht über der Flimmerverschmelzfrequenz zu emittieren, da dann geschlussfolgert werden kann, dass sich das Objekt 40 nicht mehr in dem Raumwinkel Ω₃ des Lichtquellenelementes 21.3 befindet.

Figur 2 zeigt eine schematische Ansicht einer alternativen Ausführungsvariante einer Lichteinheit 20 des Scheinwerfers 10 aus Fig. 1. Anders als in Fig. 1 ist das Lichtquellenelement 21 nicht unmittelbar neben dem Photodetektor 23 angeordnet. Stattdessen ist der Photodetektor 23 in einem Abstand x von dem Lichtquellenelement 21 angeordnet. Der Abstand x beträgt in diesem Ausführungsbeispiel den halben Durchmesser d einer Lichtemissionsfläche des Lichtquellenelementes 21.

Figur 3 zeigt eine schematische Vorderansicht auf ein Ausführungsbeispiel eines erfindungsgemäßen Kraftfahrzeuges 30 mit zwei erfindungsgemäßen blendfreien Scheinwerfern 10.1, 10.2.

### Bezugszeichenliste

- 10: Scheinwerfer
- 20: Lichteinheit
- 21: Lichtquellenelement
- 22: Projektionsoptik
- 23: Photodetektor
- 30: Kraftfahrzeug
- 40: Objekt
- A: erste optische Achse
- B: zweite optische Achse
- R: Raum
- Ω: Raumwinkel
- d: Durchmesser der Lichtemissionsfläche des Lichtquellenelements
- x: Abstand zwischen Lichtquellenelement und Photodetektor

## Patentansprüche

1. Blendfreier Scheinwerfer (10) für ein Kraftfahrzeug (30) mit einer Vielzahl von Lichteinheiten (20), wobei jeweils jede der Lichteinheiten (20) aufweist:
(a) ein Lichtquellenelement (21), das dazu eingerichtet ist, Licht entlang einer ersten optischen Achse (A) in Richtung eines Raumes (R) zu emittieren,
(b) eine Projektionsoptik (22), die in Richtung des emittierten Lichtes hinter dem Lichtquellenelement (21) angeordnet ist und dazu eingerichtet ist, das von dem Lichtquellenelement (21) emittierte Licht unter einem Raumwinkel (Ω) in den Raum (R) zu projizieren, und
(c) einen Photodetektor (23), der in Richtung des emittierten Lichtes vor der Projektionsoptik (22) angeordnet und dazu eingerichtet ist, das von der Projektionsoptik (22) in den Raum (R) projizierte und von einem Objekt (40) in dem Raum (R) entlang einer zweiten optischen Achse (B) zurück zu der Projektionsoptik (22) reflektierte Licht zu erfassen,
und wobei der Scheinwerfer (10) dazu eingerichtet ist, das Emittieren von Licht eines Lichtquellenelementes (20) zu beenden, wenn das emittierte Licht zurück reflektiert und von dem Photodetektor (23) der Lichteinheit (20) mit dem Lichtquellenelement (20) erfasst wird, **dadurch gekennzeichnet, dass** jede der Projektionsoptiken (22) dazu eingerichtet ist, Licht unter einem Raumwinkel (Ω) in den Raum (R) zu projizieren, der sich von den Raumwinkeln (Ω) der anderen Projektionsoptiken (22) unterscheidet.

2. Scheinwerfer (10) nach Anspruch 1, **dadurch gekennzeichnet, dass** der Scheinwerfer (10) zumindest eine Steuereinheit aufweist oder der Scheinwerfer (10) mit einer Steuereinheit des Kraftfahrzeuges (30) verbunden ist, die dazu eingerichtet ist, zumindest eine der Lichtquellenelemente (21) zu steuern.

3. Scheinwerfer (10) nach Anspruch 1 oder 2, **dadurch gekennzeichnet, dass** die Lichtquellenelemente (21) dazu eingerichtet sind, zu einem Testzeitpunkt nach dem Beenden des Emittierens von Licht, testweise Licht zu emittieren und:
(a) wenn das testweise emittierte Licht nicht zurück reflektiert und von dem Photodetektor (23) ihrer Lichteinheit (20) nicht erfasst wird, weiter Licht zu emittieren, und
(b) wenn das testweise emittierte Licht zurück reflektiert und von dem Photodetektor (23) ihrer Lichteinheit (20) erfasst wird, zu einem weiteren Testzeitpunkt erneut testweise Licht zu emittieren.

4. Scheinwerfer (10) nach Anspruch 3, **dadurch gekennzeichnet, dass** eine Frequenz des testweise emittierten Lichtes unterhalb einer Flimmerverschmelzfrequenz des menschlichen Auges liegt.

5. Scheinwerfer (10) nach Anspruch 3 oder 4, **dadurch gekennzeichnet, dass** der Scheinwerfer (10) dazu eingerichtet ist, anhand des testweise emittierten Lichtes auszuwerten, ob sich das Objekt (40) bewegt und insbesondere zu ermitteln, mit welcher Geschwindigkeit sich das Objekt (40) bewegt.

6. Scheinwerfer (10) nach einem der voranstehenden Ansprüche, **dadurch gekennzeichnet, dass** der Photodetektor (23) jeder Lichteinheit (20) in Richtung quer zu der jeweiligen ersten optischen Achse (A) neben dem Lichtquellenelement (21) ihrer Lichteinheit (20) angeordnet ist.

7. Scheinwerfer (10) nach einem der Ansprüche 1 bis 5, **dadurch gekennzeichnet, dass** die erste optische Achse (A) und die zweite optische Achse (B) einander entsprechen.

8. Scheinwerfer (10) nach einem der voranstehenden Ansprüche, **dadurch gekennzeichnet, dass** der Photodetektor (23) jeder Lichteinheit (20) höchstens in einem Abstand (x) von dem Lichtquellenelement (21) ihrer Lichteinheit (20) angeordnet ist, der dem Dreifachen einer größten Seitenlänge oder einem Durchmesser (d) einer Lichtemissionsfläche des Lichtquellenelements (21) entspricht.

9. Scheinwerfer (10) nach einem der voranstehenden Ansprüche, **dadurch gekennzeichnet, dass** der Scheinwerfer (10) dazu eingerichtet ist, zurück reflektiertes Licht anhand eines Lichtparameters des emittierten Lichtes den Lichtquellenelementen (21) zuzuordnen.

10. Scheinwerfer (10) nach einem der voranstehenden Ansprüche, **dadurch gekennzeichnet, dass** jede der Lichtquellenelemente (21) dazu eingerichtet ist, Licht zu einem Zeitpunkt zu emittieren, der sich von dem Zeitpunkt der Emission des Lichtes der anderen Lichtquellenelemente (21) unterscheidet.

11. Scheinwerfer (10) nach einem der voranstehenden Ansprüche, **dadurch gekennzeichnet, dass** jede der Lichtquellenelemente (21) dazu eingerichtet ist, Licht mit einer Frequenz zu emittieren, die sich von der Frequenz des Lichtes der anderen Lichtquellenelemente (21) unterscheidet.

12. Scheinwerfer (10) nach einem der voranstehenden Ansprüche, **dadurch gekennzeichnet, dass** die Lichtquellenelemente (21) als LED, laserbasiert und/oder mit einem Lichtleiter ausgebildet sind und/oder das emittierte Licht im für das menschliche Auge sichtbaren Wellenlängenbereich liegt.

13. Kraftfahrzeug (30) mit zumindest einem Scheinwerfer (10) nach einem der voranstehenden Ansprüche.

14. Kraftfahrzeug (30) nach Anspruch 13, wobei der zumindest eine Scheinwerfer (10) dazu eingerichtet ist, dass alle Raumwinkel, unter denen die Projektionsoptiken (22) das Licht in den Raum projizieren, einen 360°-Sichtbereich um das Kraftfahrzeug (30) herum abdecken.

## Claims

1. Glare-free headlamp (10) for a motor vehicle (30) with a variety of light units (20), wherein each of the light units (20) has:
(a) a light source element (21) that is set up to emit light along a first optical axis (A) in the direction of a space (R),
(b) a projection lens (22) that is arranged in the direction of the emitted light behind the light source element (21) and is set up to project the light, which is emitted by the light source element (21), under a spatial angle (Ω) into the space (R), and
(c) a photodetector (23) that is arranged in the direction of the emitted light in front of the projection lens (22) and is set up to capture the light that is projected by the projection lens (22) into the space (R) and is reflected by an object (40) in the space (R) along a second optical axis (B) back to the projection lens (22),
and wherein the headlamp (10) is set up to stop emission of the light from a light source element (20) if the emitted light is reflected back and is captured by the photodetector (23) of the light unit (20) with the light source element (20), **characterised in that** each of the projection lenses (22) is set up to project light under a spatial angle (Ω) into the space (R), which distinguishes itself from the spatial angles (Ω) of the other projection lenses (22).

2. Headlamp (10) according to Claim 1, **characterised in that** the headlamp (10) has at least one control unit or the headlamp (10) is connected to a control unit of the motor vehicle (30) that is set up to control at least one of the light source elements (21).

3. Headlamp (10) according to Claim 1 or 2, **characterised in that** the light source elements (21) are set up to emit light for test purposes at a test time after light has stopped being emitted and:
(a) if the light emitted for test purposes is not reflected back and is not captured by the photodetector (23) of the light unit (20) to continue to emit light, and
(b) if the light emitted for test purposes is reflected back and is captured by the photodetector (23) of the light unit (20) to emit light for test purposes again at another test time.

4. Headlamp (10) according to Claim 3, **characterised in that** a frequency of the light emitted for test purposes is under a flicker fusion threshold of the human eye.

5. Headlamp (10) according to Claim 3 or 4, **characterised in that** the headlamp (10) is set up to assess, based on the light emitted for test purposes, whether the object (40) moves and, in particular, to determine the speed at which the object (40) moves.

6. Headlamp (10) according to one of the foregoing Claims, **characterised in that** the photodetector (23) of each light unit (20) is arranged in the direction transverse to the respective first optical axis (A) next to the light source element (21) of the light unit (20).

7. Headlamp (10) according to one of the Claims 1 to 5, **characterised in that** the first optical axis (A) and the second optical axis (B) correspond to one another.

8. Headlamp (10) according to one of the foregoing Claims, **characterised in that** the photodetector (23) of each light unit (20) is arranged at a maximum distance (x) from the light source element (21) of the light unit (20) corresponding to three times a maximum side length or corresponding to a diameter (d) of a light emission surface of the light source element (21).

9. Headlamp (10) according to one of the foregoing Claims, **characterised in that** the headlamp (10) is set up to assign reflected-back light to the light source elements (21) based on a light parameter of the emitted light.

10. Headlamp (10) according to one of the foregoing Claims, **characterised in that** each of the light source elements (21) is set up to emit light at a point in time that differs from the point in time of the emission of light of the other light source elements (21).

11. Headlamp (10) according to one of the foregoing Claims, **characterised in that** each of the light source elements (21) is set up to emit light with a frequency that differs from the frequency of the light of the other light source elements (21).

12. Headlamp (10) according to one of the foregoing Claims **characterised in that** the light source elements (21) are developed as LED, laser-based and/or with a light guide and/or the emitted light is in the wavelength range visible to the human eye.

13. Motor vehicle (30) with at least one headlamp (10) according to one of the foregoing Claims.

14. Motor vehicle (30) according to Claim 13, wherein at least one headlamp (10) is set up such that all spatial angles, including the projection lenses (22) projecting the light into the space, cover a 360° visible area around the motor vehicle (30).

## Revendications

1. Phare de véhicule sans éblouissement (10) pour un véhicule automobile (30) comprenant plusieurs unités lumineuses (20), chacune des unités lumineuses (20) comprenant respectivement :
(a) un élément de source lumineuse (21) configuré pour émettre de la lumière le long d'un premier axe optique (A) en direction d'un espace (R),
(b) une optique de projection (22) disposée derrière l'élément de source lumineuse (21) dans la direction de la lumière émise et configurée pour projeter la lumière émise par l'élément de source lumineuse (21) dans l'espace (R) sous un angle solide (Ω), et
(c) un photodétecteur (23) disposé devant l'optique de projection (22) dans la direction de la lumière émise et configuré pour détecter la lumière projetée dans l'espace (R) par l'optique de projection (22) et réfléchie vers l'optique de projection (22) par un objet (40) dans l'espace (R) le long d'un deuxième axe optique (B),
le phare de véhicule (10) étant configuré pour stopper l'émission de lumière d'un élément de source lumineuse (20) lorsque la lumière émise est réfléchie et détectée par le photodétecteur (23) de l'unité lumineuse (20) avec l'élément de source lumineuse (20), **caractérisé en ce que** chacune des optiques de projection (22) est configurée pour projeter de la lumière dans l'espace (R) sous un angle solide (Ω) différent des angles solides (Ω) des autres optiques de projection (22).

2. Phare automobile (10) selon la revendication 1, **caractérisé en ce que** le phare automobile (10) comporte au moins une unité de commande ou que le phare automobile (10) est relié à une unité de commande du véhicule automobile (30) configurée pour commander au moins un des éléments de source lumineuse (21).

3. Phare automobile (10) selon la revendication 1 ou 2, **caractérisé en ce que** les éléments de source lumineuse (21) sont configurés pour émettre de la lumière à titre d'essai à un moment de test après avoir cessé d'émettre de la lumière, et
(a) pour continuer d'émettre de la lumière si la lumière émise à titre d'essai n'est pas réfléchie et détectée par le photodétecteur (23) de son unité lumineuse (20), et
(b) pour émettre à nouveau de la lumière à titre d'essai à un autre moment de test si la lumière émise à titre d'essai est réfléchie et détectée par le photodétecteur (23) de son unité lumineuse (20).

4. Phare automobile (10) selon la revendication 3, **caractérisé en ce qu'**une fréquence de la lumière émise à titre d'essai est inférieure à une fréquence de fusion du scintillement de l'œil humain.

5. Phare automobile (10) selon la revendication 3 ou 4, **caractérisé en ce que** le phare automobile (10) est configuré pour évaluer, à l'aide de la lumière émise à titre d'essai , si l'objet (40) se déplace et, en particulier, pour évaluer à quelle vitesse l'objet (40) se déplace.

6. Phare automobile (10) selon l'une des revendications précédentes, **caractérisé en ce que** le photodétecteur (23) de chaque unité lumineuse (20) est disposé à côté de l'élément de source lumineuse (21) de son unité lumineuse (20) dans une direction transversale au premier axe optique respectif (A).

7. Phare automobile (10) selon l'une des revendications 1 à 5, **caractérisé en ce que** le premier axe optique (A) et le deuxième axe optique (B) correspondent.

8. Phare automobile (10) selon l'une des revendications précédentes, **caractérisé en ce que** le photodétecteur (23) de chaque unité lumineuse (20) est situé au maximum à une distance (x) de l'élément de source lumineuse (21) de son unité lumineuse (20) qui correspond à trois fois la plus grande longueur latérale ou un diamètre (d) d'une surface d'émission de lumière de l'élément de source lumineuse (21).

9. Phare automobile (10) selon l'une des revendications précédentes, **caractérisé en ce que** le phare automobile (10) est configuré pour associer la lumière réfléchie aux éléments de source lumineuse (21) sur la base d'un paramètre de lumière de la lumière émise.

10. Phare automobile (10) selon l'une des revendications précédentes, **caractérisé en ce que** chacun des éléments de source lumineuse (21) est configuré pour émettre de la lumière à un moment différent du moment d'émission de la lumière des autres éléments de source lumineuse (21).

11. Phare automobile (10) selon l'une des revendications précédentes, **caractérisé en ce que** chacun des éléments de source lumineuse (21) est configuré pour émettre de la lumière à une fréquence différente de la fréquence de la lumière des autres éléments de source lumineuse (21).

12. Phare automobile (10) selon l'une des revendications précédentes, **caractérisé en ce que** les éléments de source lumineuse (21) sont réalisés sous forme de LED, de laser et/ou avec un guide de lumière et/ou la lumière émise se situe dans la plage de longueurs d'onde visible pour l'œil humain.

13. Un véhicule automobile (30) avec au moins un phare automobile (10) selon l'une des revendications ci-dessus.

14. Véhicule automobile (30) selon la revendication 13, un phare automobile (10) au moins étant configuré pour que tous les angles solides sous lesquels les optiques de projection (22) projettent la lumière dans l'espace couvrent une zone visible de 360°-autour du véhicule automobile (30).
